# EUROPEAN PATENT APPLICATION

(11) **EP 2 635 055 A1**
(43) Date of publication of application: **04.09.2013**
(21) Application number: 10842894.7
(22) Date of filing: 16.11.2010
(51) Int. Cl.: H04W 8/00

(54) **METHOD AND APPARATUS FOR ACCESSING NETWORK**

(71) Applicant: Huawei Technologies Co., Ltd., Guangdong 518129 (CN)
(72) Inventor: ZHANG, Yanping, Shenzhen Guangdong 518129 (CN); WU, Wenfu, Shenzhen Guangdong 518129 (CN); LI, Yan, Shenzhen Guangdong 518129 (CN); FRANK, Mademman, Shenzhen Guangdong 518129 (CN)
(74) Representative: Pfenning, Meinig & Partner GbR
(86) International application number: PCT/CN2010/078807
(87) International publication number: WO 2011/085611

(57) **Abstract**

Embodiments of the present invention relate to network access methods and apparatuses. One of the methods includes: receiving, by a second SGSN, a first reject cause value sent by an access network device, where the first reject cause value is sent by a first SGSN to the access network device; acquiring, by the second SGSN, a second reject cause value from itself; and sending, by the second SGSN, a softer reject cause value between the first reject cause value and the second reject cause value to the access network device.

## Description

### FIELD OF THE INVENTION

Embodiments of the present invention relate to communications technologies, and in particular, to a network access method and apparatus.

### BACKGROUND OF THE INVENTION

In a general packet radio service (General Packet Radio Service, GPRS for short) network, a terminal entity/mobile terminal (Terminal Entity/Mobile Terminal, TE/MT for short), that is, an MS by using a base station subsystem (Base Station Subsystem, BSS for short), may connect to a packet data network (Packet Data Network, PDN for short) by using serving GPRS supporting nodes (Serving GPRS Supporting Node, SGSN for short) of multiple operators. This feature may be called a multi-operator core network (Multi-Operator Core Network, MOCN for short), and the feature of the BSS may be called MOCN supporting.

When an MS requests an access to a network by using a BSS, the BSS does not know an SGSN of which operator is capable of serving the MS, and therefore, the BSS will attempt to separately send an access request message from the MS to each SGSN. If an SGSN that has received the access request message determines that the MS cannot connect to the SGSN, the SGSN returns a reject cause value and an access request reject message including the reject cause value to the BSS. If an SGSN that has received the access request message determines that the MS is capable of connecting to the SGSN, the SGSN performs an access procedure of the MS. If the BSS receives reject cause values and access request reject messages including the reject cause values, which are returned by all SGSNs, it selects the access request reject message corresponding to the softest (softest) reject cause value and sends the access request reject message to the MS, so that the MS performs a corresponding operation according to the reject cause value included in the access request reject message. Each message exchanged between each SGSN and the MS has a logical link control (Logical Link Control, LLC for short) parameter, such as a sequence number used at an LLC layer.

Each SGSN uses its own LLC parameter to interact with the MS. Therefore, if an access request reject message that is received by the MS and includes a reject cause value is not an access request reject message sent by an SGSN (an SGSN last interacting with the MS) last selected by the BSS, the LLC parameter corresponding to the access request reject message received by the MS may be inconsistent with the LLC parameter of the SGSN. For example, a sequence number that is used at the LLC layer and corresponds to the access request reject message received by the MS is less than the LLC parameter corresponding to the access request reject message sent by the SGSN. As a result, the MS discards the access request reject message, and after a period of time, the MS requests an access to the network by using the BSS again and the foregoing problem may occur again. In this case, the MS cannot learn a cause for a rejected access all the time. Therefore, a network access delay increases.

### SUMMARY OF THE INVENTION

Embodiments of the present invention provide a network access method and apparatus, which are used to avoid a problem that an MS discards an access request reject message sent by an SGSN and reduce a network access delay.

An embodiment of the present invention provides a network access method, including:
receiving, by a second SGSN, a first reject cause value sent by an access network device, where the first reject cause value is sent by a first SGSN to the access network device;
acquiring, by the second SGSN, a second reject cause value from itself; and
sending, by the second SGSN, a softer reject cause value between the first reject cause value and the second reject cause value to the access network device.

An embodiment of the present invention provides another network access method, including:
sending, by an access network device, a first reject cause value to a second SGSN, where the first reject cause value is sent by a first SGSN to the access network device; and
acquiring, by the access network device, a softer reject cause value between the first reject cause value sent by the second SGSN and a second reject cause value, where the second reject cause value is a reject cause value acquired by the second SGSN from itself.

An embodiment of the present invention provides still another network access method, including:
sending, by an access network device according to acquired reject cause values sent by SGSNs, an access request message of the MS to an SGSN corresponding to the softest reject cause value;
receiving, by the access network device, an access request reject message returned by the SGSN; and
sending, by the access network device, the access request reject message to the MS.

An embodiment of the present invention provides yet still another network access method, including:
setting, by an access network device according to acquired reject cause values sent by SGSNs, an LLC parameter corresponding to the softest reject cause value as a latest LLC parameter; and
sending, by the access network device, an access request reject message corresponding to the softest reject cause value to an MS.

An embodiment of the present invention further provides a network access apparatus, including:
a receiving module, configured to receive a first reject cause value sent by an access network device, where the first reject cause value is sent by a first SGSN to the access network device;
an acquiring module, configured to acquire a second reject cause value from itself; and
a sending module, configured to send a softer reject cause value between the first reject cause value and the second reject cause value to the access network device.

An embodiment of the present invention further provides another network access apparatus, including:
a sending module, configured to send a first reject cause value to a second SGSN, where the first reject cause value is sent by a first SGSN to the access network device; and
an acquiring module, configured to acquire a softer reject cause value between the first reject cause value sent by the second SGSN and a second reject cause value, where the second reject cause value is a reject cause value acquired by the second SGSN from itself.

An embodiment of the present invention further provides still another network access apparatus, including:
a first sending module, configured to send, according to acquired reject cause values sent by SGSNs, an access request message of the MS to an SGSN corresponding to the softest reject cause value;
a receiving module, configured to receive an access request reject message returned by the SGSN; and
a second sending module, configured to send the access request reject message to the MS.

An embodiment of the present invention further provides yet still another network access apparatus, including:
a setting module, configured to set, according to acquired reject cause values sent by SGSNs, an LLC parameter corresponding to the softest reject cause value as a latest LLC parameter; and
a sending module, configured to send an access request reject message corresponding to the softest reject cause value to an MS.

As can be seen from the foregoing technical solutions, in embodiments of the present invention, a second SGSN receives a first reject cause value that is sent by an access network device and is from a first SGSN for rejecting an access of an MS, and acquires a second reject cause value from the second SGSN for rejecting an access of the MS, so that the second SGSN is capable of sending a softer reject cause value between the first reject cause value and the second reject cause value to the access network device, and a reject cause value acquired by the access network device is always the softest one, and further an access request reject message that is acquired last and includes the softest reject cause value can be returned to the MS after reject cause values sent by all SGSNs interconnecting to the access network device are acquired, thereby avoiding a problem caused by the MS for discarding an access request reject message sent by an SGSN, reducing a network access delay, and improving user experience. Alternatively, after an access network device acquires reject cause values sent by all SGSNs interconnecting to the access network device, the access network device sends, according to the acquired reject cause values that are for rejecting an access of an MS and sent by the SGSNs, an access request message of the MS to an SGSN corresponding to the softest reject cause value, so that a reject cause value last acquired by the access network device can be the softest one, and further the last acquired reject cause value is returned to the MS, thereby avoiding a problem caused by the MS for discarding an access request reject message sent by an SGSN and reducing a network access delay. Alternatively, after an access network device acquires reject cause values sent by all SGSNs interconnecting to the access network device, the access network device sets, according to the acquired reject cause values that are for rejecting an access of an MS and sent by the SGSNs, an LLC parameter corresponding to the softest reject cause value as a latest LLC parameter, so that the access network device is capable of using the latest LLC parameter to return the softest reject cause value to the MS, thereby avoiding a problem caused by the MS for discarding an access request reject message sent by an SGSN and reducing a network access delay.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from these accompanying drawings without creative efforts.

FIG. 1 is a schematic flowchart of a network access method according to a first embodiment of the present invention;

FIG. 2 is a schematic flowchart of another network access method according to a second embodiment of the present invention;

FIG. 3 is a schematic flowchart of a method for processing a network access according to a third embodiment of the present invention;

FIG. 4 is a schematic flowchart of still another network access method according to a fourth embodiment of the present invention;

FIG. 5 is a schematic flowchart of still another network access method according to a fifth embodiment of the present invention;

FIG. 6 is a schematic flowchart of yet still another network access method according to a sixth embodiment of the present invention;

FIG. 7 is a schematic flowchart of yet still another network access method according to a seventh embodiment of the present invention;

FIG. 8 is a schematic structural diagram of a network access apparatus according to an eighth embodiment of the present invention;

FIG. 9 is a schematic structural diagram of another network access apparatus according to a ninth embodiment of the present invention;

FIG. 10 is a schematic structural diagram of still another network access apparatus according to a tenth embodiment of the present invention;

FIG. 11 is a schematic structural diagram of yet still another network access apparatus according to an eleventh embodiment of the present invention; and

FIG. 12 is a format diagram of a control field in an SGSN message in the yet still another network access method according to the seventh embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

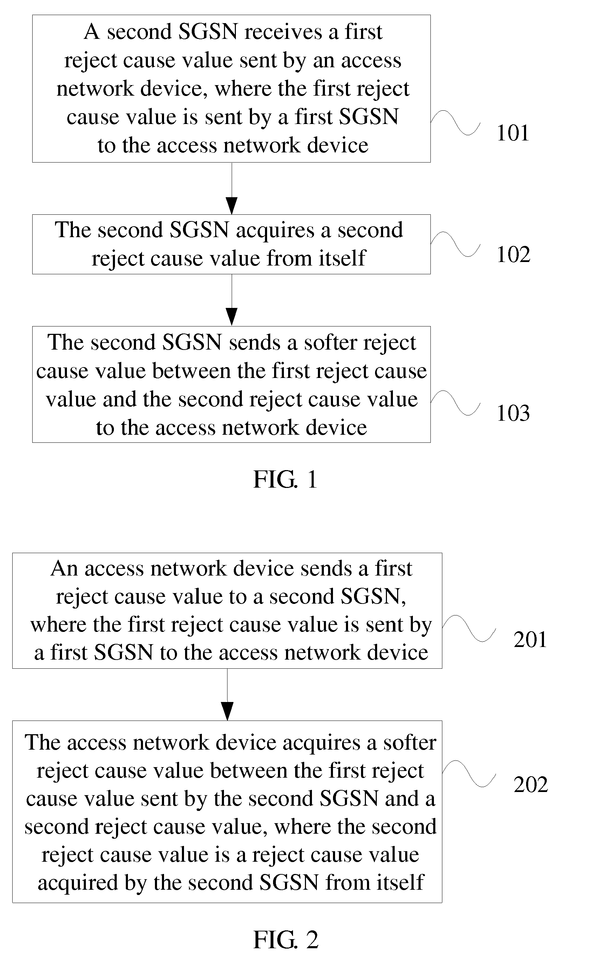

FIG. 1 is a schematic flowchart of a network access method according to a first embodiment of the present invention. As shown in FIG. 1, the network access method in this embodiment may include the following steps:

Step 101: A second SGSN receives a first reject cause value sent by an access network device, where the first reject cause value is sent by a first SGSN to the access network device.

Specifically, the second SGSN may receive a BSSGP uplink data message sent by the access network device, where the BSSGP uplink data message includes the first reject cause value of the first SGSN for rejecting an access of an MS after receiving an access request message of the MS.

Before this step, a step of acquiring, by the access network device, the first reject cause value sent by the first SGSN may further be included. Specifically, the first SGSN acquires an international mobile subscriber identification number (International Mobile Subscriber Identification Number, IMSI for short) of the MS from the MS, or acquires the IMSI of the MS from an SGSN that the MS previously attaches to. Then, the first SGSN acquires subscription data or configuration data of the MS according to the IMSI of the MS (where the configuration data includes but is not limited to a roaming agreement of an operator and the like), acquires, according to the subscription data or configuration data of the MS, the first reject cause value for rejecting the access of the MS, and sends the first reject cause value to the access network device.

In this embodiment, the first SGSN may further receive a third reject cause value sent by the access network device, where the third reject cause value is sent by a third SGSN to the access network device. Accordingly, the step of acquiring, by the access network device, the first reject cause value sent by the first SGSN may further be specifically as follows: The first SGSN acquires the IMSI of the MS from the access network device, acquires the subscription data or configuration data of the MS according to the IMSI of the MS (where the configuration data includes but is not limited to a roaming agreement of an operator and the like), and acquires, according to the subscription data or configuration data, a reject cause value for rejecting an access of the MS to the first SGSN itself; and the first SGSN sends the first reject cause value to the access network device, where the first reject cause value is a softer reject cause value between the reject cause value of the first SGSN itself and the third reject cause value.

Before this step, a step of learning, by the access network device, that the first reject cause value is not CS/PS coordination may further be included.

Step 102: The second SGSN acquires a second reject cause value from itself.

Specifically, after the second SGSN receives the IMSI of the MS and the access request message of the MS that are sent by the access network device, the second SGSN acquires the subscription data or configuration data of the MS according to the IMSI of the MS (where the configuration data includes but is not limited to a roaming agreement of an operator and the like) and acquires, according to the subscription data or configuration data of the MS, the second reject cause value for rejecting an access of the MS.

Step 103: The second SGSN sends a softer reject cause value between the first reject cause value and the second reject cause value to the access network device.

It should be noted that a reject cause value in this embodiment is a reject cause value for rejecting an access of the MS.

Specifically, the second SGSN may send a BSSGP downlink data message to the access network device, where the BSSGP downlink data message includes the softer reject cause value (if the access network device needs to send the softer reject cause value to a next SGSN, the access network device sends this reject cause value parameter to the SGSN) and an access request reject message including the softer reject cause value (if the access network device needs to send the softer reject cause value to the MS, the access network device sends an access request reject message including the softer reject cause value to the MS).

Further, before this step, a step of learning, by the second SGSN, that the first reject cause value is not CS/PS coordination may further be included.

The network access method in this embodiment may further include sending, by the second SGSN, the second reject cause value to the access network device if the second SGSN learns that the first reject cause value is CS/PS coordination.

Further, after step 103, the access network device may further send the access request reject message including the softer reject cause value to the MS. Specifically, if the access network device has acquired reject cause values sent by all SGSNs interconnecting to the access network device, the access network device sends the access request reject message including the softer reject cause value to the MS.

The access network device may include but is not limited to a base station subsystem (Base Station Subsystem, BSS for short) or a base station controller (Base Station Controller, BSC for short). The embodiment of the present invention merely takes a BSS as an example for description. The access request message may further be called a non access stratum (Non Access Stratum, NAS for short) request message, which may specifically include but is not limited to the following message: an attach request (Attach Request) message or a routing area update request (Routing Area Update Request) message. The access request reject message may further be called a non access stratum (Non Access Stratum, NAS for short) reject message, which may specifically include but is not limited to the following message: an attach reject (Attach Reject) message or a routing area update reject (Routing Area Update Reject) message.

The network access method provided in the embodiment of the present invention is used. In this case, because a reject cause value acquired by an access network device each time is the softest one, if the access network device receives reject cause values returned by all SGSNs for rejecting an access of an MS, the access network device may select a last acquired access request reject message and send the last acquired access request reject message to the MS, so that the MS performs a corresponding operation according to a reject cause value included in the access request reject message.

In this embodiment, a second SGSN receives a first reject cause value that is sent by an access network device and is from a first SGSN for rejecting an access of an MS, and acquires a second reject cause value from the second SGSN for rejecting an access of the MS, so that the second SGSN is capable of sending a softer reject cause value between the first reject cause value and the second reject cause value to the access network device, and a reject cause value acquired by the access network device is always the softest one, and further an access request reject message that is acquired last and includes the softest reject cause value can be returned to the MS after reject cause values sent by all SGSNs interconnecting to the access network device are acquired, thereby avoiding a problem caused by the MS for discarding an access request reject message sent by an SGSN, reducing a network access delay, and improving user experience.

FIG. 2 is a schematic flowchart of another network access method according to a second embodiment of the present invention. As shown in FIG. 2, the network access method in this embodiment may include the following steps:

Step 201: An access network device sends a first reject cause value to a second SGSN, where the first reject cause value is sent by a first SGSN to the access network device.

Specifically, the access network device may send a BSSGP uplink data message to the second SGSN, where the BSSGP uplink data message includes the first reject cause value of the first SGSN for rejecting an access of an MS after receiving an access request message of the MS.

Before this step, a step of acquiring, by the access network device, the first reject cause value sent by the first SGSN may further be included. Specifically, the first SGSN acquires an international mobile subscriber identification number (International Mobile Subscriber Identification Number, IMSI for short) of the MS from the MS, or acquires the IMSI of the MS from an SGSN that the MS previously attaches to. Then, the first SGSN acquires subscription data or configuration data of the MS according to the IMSI of the MS (where the configuration data includes but is not limited to a roaming agreement of an operator and the like), acquires, according to the subscription data or configuration data of the MS, the first reject cause value for rejecting the access of the MS, and sends the first reject cause value to the access network device.

In this embodiment, the first SGSN may further receive a third reject cause value sent by the access network device, where the third reject cause value is sent by a third SGSN to the access network device. Accordingly, the step of acquiring, by the access network device, the first reject cause value sent by the first SGSN may further be specifically as follows: The first SGSN acquires the IMSI of the MS from the access network device, acquires the subscription data or configuration data of the MS according to the IMSI of the MS (where the configuration data includes but is not limited to a roaming agreement of an operator and the like), and acquires, according to the subscription data or configuration data, a reject cause value for rejecting an access of the MS to the first SGSN itself; and the first SGSN sends the first reject cause value to the access network device, where the first reject cause value is a softer reject cause value between the reject cause value of the first SGSN itself and the third reject cause value.

Before this step, a step of learning, by the access network device, that the first reject cause value is not CS/PS coordination may further be included.

Step 202: The access network device acquires a softer reject cause value between the first reject cause value sent by the second SGSN and a second reject cause value, where the second reject cause value is a reject cause value acquired by the second SGSN from itself.

Specifically, the access network device may receive a BSSGP downlink data message sent by the second SGSN, where the BSSGP downlink data message includes the softer reject cause value and an access request reject message including the softer reject cause value.

It should be noted that a reject cause value in this embodiment is a reject cause value for rejecting an access of the MS. Specifically, after the access network device sends the IMSI of the MS and the access request message of the MS to the second SGSN, the second SGSN acquires the subscription data or configuration data of the MS according to the IMSI of the MS (where the configuration data includes but is not limited to a roaming agreement of an operator and the like) and acquires, according to the subscription data or configuration data of the MS, the second reject cause value for rejecting an access of the MS.

Further, after step 202, the access network device may further send the access request reject message including the softer reject cause value to the MS. Specifically, if the access network device has acquired reject cause values sent by all SGSNs interconnecting to the access network device, the access network device sends the access request reject message including the softer reject cause value to the MS.

The access network device may include but is not limited to a base station subsystem (Base Station Subsystem, BSS for short) or a base station controller (Base Station Controller, BSC for short). The embodiment of the present invention merely takes a BSS as an example for description. The access request message may further be called a non access stratum (Non Access Stratum, NAS for short) request message, which may specifically include but is not limited to the following message: an attach request (Attach Request) message or a routing area update request (Routing Area Update Request) message. The access request reject message may further be called a non access stratum (Non Access Stratum, NAS for short) reject message, which may specifically include but is not limited to the following message: an attach reject (Attach Reject) message or a routing area update reject (Routing Area Update Reject) message.

The network access method provided in the embodiment of the present invention is used. In this case, because a reject cause value acquired by an access network device each time is the softest one, if the access network device receives reject cause values returned by all SGSNs for rejecting an access of an MS, the access network device may select a last acquired access request reject message and send the last acquired access request reject message to the MS, so that the MS performs a corresponding operation according to a reject cause value included in the access request reject message.

In this embodiment, an access network device sends a first reject cause value to a second SGSN, and the access network device acquires a softer reject cause value between the first reject cause value sent by the second SGSN and a second reject cause value acquired by the second SGSN from itself, so that a reject cause value acquired by the access network device is always the softest one, and further an access request reject message that is acquired last and includes the softest reject cause value can be returned to the MS after reject cause values sent by all SGSNs interconnecting to the access network device are acquired, thereby avoiding a problem caused by the MS for discarding an access request reject message sent by an SGSN, reducing a network access delay, and improving user experience.

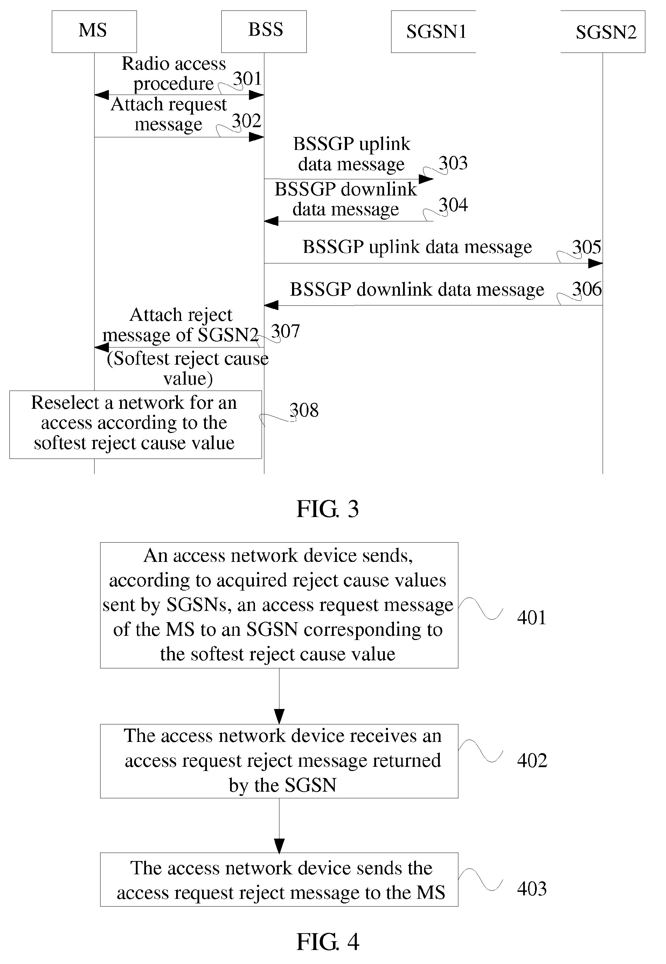

FIG. 3 is a schematic flowchart of a method for processing a network access according to a third embodiment of the present invention and this embodiment is a specific example of the first embodiment and the second embodiment of the present invention. In this embodiment, a BSS is taken as an example of an access network device. The BSS separately interconnects to an SGSN1 of an operator 1 and an SGSN2 of an operator 2. As shown in FIG. 3, the network access method in this embodiment may include the following steps:

Step 301: An MS interacts with the BSS and performs a radio access procedure, and the BSS allocates radio resources to the MS.

Step 302: The MS sends an attach request (Attach Request) message to the BSS.

Step 303: The BSS sends a Base Station Subsystem GPRS Protocol (Base Station Subsystem GPRS Protocol, BSSGP for short) uplink data (BSSGP UL-UNIDATA) message to the SGSN1, where the BSSGP uplink data message includes the attach request message and a redirection attempt flag (redirection attempt flag), and the redirection attempt flag may be used to indicate that the BSS supports an MOCN.

Further, the BSS may still need to save information about the SGSN1, record that the attach request message of the MS has been sent to the SGSN1, and no longer send the attach request message to the SGSN1.

Step 304: The SGSN1 may acquire an IMSI of the MS from the MS or acquire the IMSI of the MS from an SGSN that the MS previously attaches to, acquire subscription data or configuration data of the MS according to the acquired IMSI of the MS, determine that the MS cannot connect to the SGSN1, and send a BSSGP downlink data (BSSGP DL-UNIDATA) message to the BSS, where the BSSGP downlink data message includes an attach reject message, the IMSI of the MS, the attach request message, a redirection indication (redirection indication), and a reject cause value (reject cause), and the attach reject message includes the reject cause value.

The reject cause value may be included in the redirection indication, or may also be an independent cell, which is not limited in this embodiment.

Step 305: The BSS learns, according to the acquired redirection indication, that the SGSN1 rejects an access of the MS, and sends the BSSGP uplink data (BSSGP UL-UNIDATA) message to the SGSN2, where the BSSGP uplink data message includes the attach request message, the redirection attempt flag (redirection attempt flag), the IMSI of the MS, and the reject cause value returned by the SGSN1, and the redirection attempt flag may be used to indicate that the BSS supports the MOCN.

The reject cause value may be included in the redirection attempt flag, or may also be an independent cell, which is not limited in this embodiment.

Specifically, the BSS may further identify the acquired reject cause value returned by the SGSN1. If it is identified that the reject cause value is not CS/PS coordination (CS/PS coordination), the BSS sends the reject cause value to the SGSN2. If it is identified that the reject cause value is CS/PS coordination (CS/PS coordination), the BSS does not send the reject cause value to the SGSN2. In this case, a related procedure in the prior art is performed, and details are not repeated herein.

Step 306: The SGSN2 acquires subscription data or configuration data of the MS according to the acquired IMSI of the MS, determines that the MS cannot connect to the SGSN2 because of a cause identified in a reject cause value of the SGSN2 itself, and sends the BSSGP downlink data (BSSGP DL-UNIDATA) message to the BSS, where the BSSGP downlink data message includes the attach reject message, the IMSI of the MS, the attach request message, the redirection indication, and the reject cause value (reject cause), the reject cause value is a softer reject cause value between the reject cause value acquired by the SGSN2 from the BSS and the reject cause value of the SGSN2 itself, and the attach reject message includes the softer reject cause value. (A softer reject cause value refers to a cause value ranking the first according to an order defined in a standard, and generally indicates a cause value that has a minor impact on network selection of the MS. For details, reference may be made to the following descriptions about the standard.)

The reject cause value may be included in the redirection indication, or may also be an independent cell, which is not limited in this embodiment.

The ascending order of reject cause values defined in an existing standard is #15<#14<#13<#12<#11, where definitions of each of the reject cause value are as follows:
#11 PLMN not allowed (PLMN not allowed);
#12 Location area not allowed (location area not allowed);
#13 Roaming not allowed in the location area (roaming not allowed in the location area);
#14 GPRS services not allowed in this PLMN (GPRS services not allowed in this PLMN); and
#15 No Suitable Cells in Location Area (no suitable cells in location area).

Specifically, if the reject cause value acquired by the SGSN2 from the BSS is 15 (No Suitable Cells in Location Area), and the reject cause value of the SGSN2 itself is 11 (PLMN not allowed), according to a rule in the existing standard, because the reject cause value 15 is softer than the reject cause value 11, the BSSGP downlink data message sent by the SGSN2 to the BSS includes the reject cause value 15. If the reject cause value acquired by the SGSN2 from the BSS is 12 (Location area not allowed), and the reject cause value of the SGSN2 itself is 13 (Roaming not allowed in the location area), according to a rule in the existing standard, because the reject cause value 13 is softer than the reject cause value 12, the BSSGP downlink data message sent by the SGSN2 to the BSS includes the reject cause value 13.

Specifically, the SGSN2 may send a reset (Reset) message to the MS according to the redirection attempt flag included in the BSSGP uplink data message to reset an LLC parameter exchanged between the SGSN2 and the MS. It should be noted that the LLC parameter may at least include one of the following parameters: an LLC counter (counter), a sequence number (sequence number) used at an LLC layer, an unconfirmed sequence number (Unconfirmed sequence number, N(U)) used at the LLC layer, an unconfirmed send state variable (Unconfirmed send state variable, V(U)) used at the LLC layer, and another parameter of the LLC layer. When a message is exchanged between the SGSN2 and the MS, the reset LLC parameter may be written at a corresponding position in the message (such as an authentication message), thereby avoiding that the MS discards the message.

Specifically, the SGSN2 may further identify the reject cause value sent by the BSS. If it is identified that the reject cause value is not CS/PS coordination (CS/PS coordination), the SGSN2 sends a softer reject cause value between the reject cause value and the reject cause value of the SGSN2 itself to the BSS. If it is identified that the reject cause value is CS/PS coordination (CS/PS coordination), the SGSN2 sends the reject cause value of the SGSN2 itself to the BSS by using the BSSGP downlink data message.

Step 307: If the BSS has acquired redirection indications sent by all SGSNs interconnecting to the BSS, the BSS sends the MS a last acquired attach reject message, that is an attach reject message sent by the SGSN2 by using the BSSGP downlink data message, where the attach reject message includes the softest reject cause value.

Step 308: The MS reselects a network for an access according to the softest reject cause value.

In this embodiment, after acquiring a reject cause value returned by an SGSN1 for rejecting an access of an MS, a BSS sends an SGSN2 an attach request message of the MS, an IMSI of the MS, and the reject cause value sent by the SGSN1; and if the SGSN2 learns that the MS cannot connect to the SGSN2 because of a cause identified in a reject cause value of the SGSN2 itself, the SGSN2 is capable of sending a softer reject cause value and an access request reject message including the softer reject cause value to the BSS according to a soft degree of the reject cause value that is acquired from the BSS and sent by the SGSN1 and that of the reject cause value of the SGSN2 itself, so that a reject cause value acquired by the BSS is always the softest one, and further a last acquired access request reject message can be returned to the MS after access request reject messages sent by all SGSNs interconnecting to the BSS are acquired, thereby avoiding a problem caused by the MS for discarding an access request reject message sent by an SGSN, reducing a network access delay, and improving user experience.

FIG. 4 is a schematic flowchart of still another network access method according to a fourth embodiment of the present invention. As shown in FIG. 4, the network access method in this embodiment may include the following steps:

Step 401: An access network device sends, according to acquired reject cause values sent by SGSNs, an access request message of the MS to an SGSN corresponding to the softest reject cause value.

Before this step, a step of acquiring, by the access network device, the reject cause values sent by SGSNs may further be included. Specifically, each SGSN acquires an international mobile subscriber identification number (International Mobile Subscriber Identification Number, IMSI for short) of the MS from the MS or the access network device, or acquires the IMSI of the MS from an SGSN that the MS previously attaches to. Then, each SGSN acquires subscription data or configuration data of the MS according to the IMSI of the MS (where the configuration data includes but is not limited to a roaming agreement of an operator and the like), acquires, according to the subscription data or configuration data of the MS, a reject cause value for rejecting an access of the MS, and sends the reject cause value to the access network device.

Step 402: The access network device receives an access request reject message returned by the SGSN.

Step 403: The access network device sends the access request reject message to the MS.

It should be noted that a reject cause value in this embodiment is a reject cause value for rejecting an access of the MS. The access network device may include but is not limited to a base station subsystem (Base Station Subsystem, BSS for short) or a base station controller (Base Station Controller, BSC for short). The embodiment of the present invention merely takes a BSS as an example for description. The access request message may further be called a non access stratum (Non Access Stratum, NAS for short) request message, which may specifically include but is not limited to the following message: an attach request (Attach Request) message or a routing area update request (Routing Area Update Request) message. The access request reject message may further be called a non access stratum (Non Access Stratum, NAS for short) reject message, which may specifically include but is not limited to the following message: an attach reject (Attach Reject) message or a routing area update reject (Routing Area Update Reject) message.

The network access method provided in the embodiment of the present invention is used. In this case, because after an access network device acquires reject cause values that are for rejecting an access of an MS and sent by all SGSNs interconnecting to the access network device, the access network device resends an access request message of the MS to an SGSN corresponding to the softest reject cause value. Therefore, a reject cause value last acquired by the access network device is the softest one; and the access network device may select a last acquired access request reject message and send the last acquired access request reject message to the MS, so that the MS performs a corresponding operation according to a reject cause value included in the access request reject message.

In this embodiment, after an access network device acquires reject cause values sent by all SGSNs interconnecting to the access network device, the access network device sends, according to the acquired reject cause values that are for rejecting an access of an MS and sent by the SGSNs, an access request message of the MS to an SGSN corresponding to the softest reject cause value, so that a reject cause value last acquired by the access network device can be the softest one, and further the last acquired reject cause value can be returned to the MS, thereby avoiding a problem caused by the MS for discarding an access request reject message sent by an SGSN, reducing a network access delay, and improving user experience.

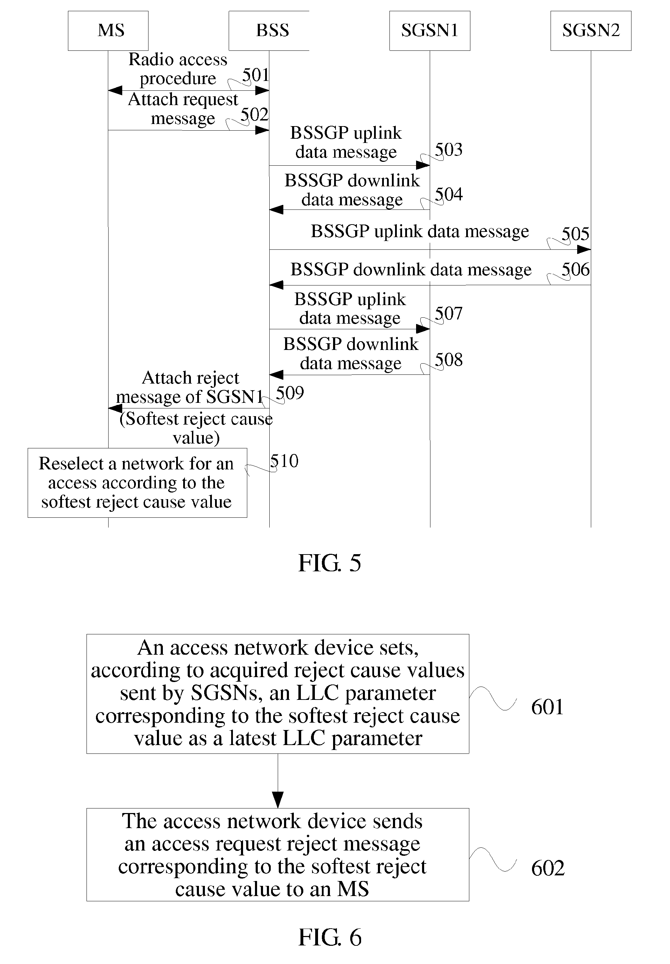

FIG. 5 is a schematic flowchart of still another network access method according to a fifth embodiment of the present invention, and this embodiment is a specific example of the fourth embodiment. In this embodiment, a BSS is taken as an example of an access network device. The BSS separately interconnects to an SGSN1 of an operator 1 and an SGSN2 of an operator 2. As shown in FIG. 5, the network access method in this embodiment may include the following steps:

Step 501: An MS interacts with the BSS and performs a radio access procedure, and the BSS allocates radio resources to the MS.

Step 502: The MS sends an attach request (Attach Request) message to the BSS.

Step 503: The BSS sends a Base Station Subsystem GPRS Protocol (Base Station Subsystem GPRS Protocol, BSSGP for short) uplink data (BSSGP UL-UNIDATA) message to the SGSN1, where the BSSGP uplink data message includes the attach request message and a redirection attempt flag (redirection attempt flag), and the redirection attempt flag may be used to indicate that the BSS supports an MOCN.

Further, the BSS may still need to save information about the SGSN1, record that the attach request message of the MS has been sent to the SGSN1, and no longer send the attach request message to the SGSN1.

Step 504: The SGSN1 may acquire an international mobile subscriber identification number (International Mobile Subscriber Identification Number, IMSI for short) of the MS from the MS or acquire the IMSI of the MS from an SGSN that the MS previously attaches to, acquire subscription data or configuration data of the MS according to the acquired IMSI of the MS, determine that the MS cannot connect to the SGSN1, and send a BSSGP downlink data (BSSGP DL-UNIDATA) message to the BSS, where the BSSGP downlink data message includes an attach reject message, the IMSI of the MS, the attach request message, a redirection indication (redirection indication), and a reject cause value (reject cause), and the attach reject message also includes the reject cause value.

The reject cause value may be included in the redirection indication, or may also be an independent cell, which is not limited in this embodiment.

Step 505: The BSS learns, according to the acquired redirection indication, that the SGSN1 rejects an access of the MS, saves the acquired reject cause value, and sends the BSSGP uplink data (BSSGP UL-UNIDATA) message to the SGSN2, where the BSSGP uplink data message includes the attach request message, the redirection attempt flag (redirection attempt flag), and the IMSI of the MS, and the redirection attempt flag may be used to indicate that the BSS supports the MOCN.

Step 506: The SGSN2 acquires the subscription data or configuration data of the MS according to the acquired IMSI of the MS, determines that the MS cannot connect to the SGSN2, and sends the BSSGP downlink data (BSSGP DL-UNIDATA) message to the BSS, where the BSSGP downlink data message includes the attach reject message, the IMSI of the MS, the attach request message, the redirection indication (redirection indication), and the reject cause value (reject cause), and the attach reject message also includes the reject cause value; and the BSS may save the attach reject message.

The reject cause value may be included in the redirection indication, or may also be an independent cell, which is not limited in this embodiment.

Specifically, the SGSN2 may send a reset (Reset) message to the MS according to the redirection attempt flag included in the BSSGP uplink data message to reset an LLC parameter exchanged between the SGSN2 and the MS. It should be noted that the LLC parameter may at least include one of the following parameters: an LLC counter (counter), a sequence number (sequence number) used at an LLC layer, an unconfirmed sequence number (Unconfirmed sequence number, N(U)) used at the LLC layer, an unconfirmed send state variable (Unconfirmed send state variable, V(U)) used at the LLC layer, and another parameter of the LLC layer. When a message is exchanged between the SGSN2 and the MS, the reset LLC parameter may be written at a corresponding position in the message (such as an authentication message), thereby avoiding that the MS discards the message.

Step 507: The BSS sends the BSSGP uplink data (BSSGP UL-UNIDATA) message to an SGSN corresponding to the softest reject cause value because the BSS has acquired redirection indications sent by all SGSNs interconnecting to the BSS, where the BSSGP uplink data message includes the attach request message and the redirection attempt flag (redirection attempt flag), and the redirection attempt flag is used to indicate that the BSS supports the MOCN.

In this step, the BSS has acquired the redirection indications sent by all SGSNs interconnecting to the BSS. Therefore, no other SGSNs that can be redirected exist. In this case, the BSS compares the acquired reject cause values (including all reject cause values acquired previously), selects the SGSN corresponding to the softest reject cause value, and sends an access request message of the MS to the SGSN corresponding to the softest reject cause value.

The ascending order of reject cause values defined in an existing standard is #15<#14<#13<#12<#11, where definitions of each of the reject cause value are as follows:
#11 PLMN not allowed (PLMN not allowed);
#12 Location area not allowed (location area not allowed);
#13 Roaming not allowed in the location area (roaming not allowed in the location area);
#14 GPRS services not allowed in this PLMN (GPRS services not allowed in this PLMN); and
#15 No Suitable Cells in Location Area (no suitable cells in location area).

Specifically, if an access reject cause value sent by the SGSN1 is 15 (No Suitable Cells in Location Area), and an access reject cause value sent by the SGSN2 is 11 (PLMN not allowed), according to a rule in the existing standard, because the reject cause value 15 is softer than the reject cause value 11, the attach request message of the MS is sent to the SGSN1. If an access reject cause value sent by the SGSN1 is 12 (Location area not allowed), and an access reject cause value sent by the SGSN2 is 13 (Roaming not allowed in the location area), according to a rule in the existing standard, because the reject cause value 13 is softer than the reject cause value 12, the attach request message of the MS is sent to the SGSN2. The first assumption may be taken as an example for describing in detail a subsequent procedure.

Step 508: The SGSN1 acquires the subscription data or configuration data of the MS according to the acquired IMSI of the MS, determines that the MS cannot connect to the SGSN1, and sends the BSSGP downlink data (BSSGP DL-UNIDATA) message to the BSS, where the BSSGP downlink data message includes the attach reject message, the IMSI of the MS, the attach request message, the redirection indication (redirection indication), and the reject cause value (reject cause), and the attach reject message also includes the reject cause value.

The reject cause value may be included in the redirection indication, or may also be an independent cell, which is not limited in this embodiment.

The SGSN1 may send a reset (Reset) message to the MS according to the redirection attempt flag included in the BSSGP uplink data message to reset an LLC parameter exchanged between the SGSN1 and the MS. When a message is exchanged between the SGSN1 and the MS, the reset LLC parameter may be written at a corresponding position in the message (such as an authentication message), thereby avoiding that the MS discards the message.

Step 509: The BSS sends the MS the acquired attach reject message sent by the SGSN1, where the attach reject message includes the softest reject cause value.

Step 510: The MS reselects a network for an access according to the softest reject cause value.

Optionally, the BSS may further determine whether the SGSN corresponding to the softest reject cause value is the last SGSN interacting with the MS. If yes, directly perform step 509 and step 510. If no, perform step 507, step 508, step 509, and step 510.

In this embodiment, after a BSS acquires reject cause values sent by all SGSNs interconnecting to the BSS, the BSS sends, according to the acquired reject cause values that are for rejecting an access of an MS and sent by all SGSNs interconnecting to the BSS, an attach request message of the MS to an SGSN corresponding to the softest reject cause value, so that a reject cause value last acquired by the BSS can be the softest one, and further the last acquired reject cause value can be returned to the MS, thereby avoiding a problem caused by the MS for discarding an access request reject message sent by an SGSN, reducing a network access delay, and improving user experience.

FIG. 6 is a schematic flowchart of yet still another network access method according to a sixth embodiment of the present invention. As shown in FIG. 6, the network access method in this embodiment may include the following steps:

Step 601: An access network device sets, according to acquired reject cause values sent by SGSNs, an LLC parameter corresponding to the softest reject cause value as a latest LLC parameter.

Before this step, a step of acquiring, by the access network device, the reject cause values sent by SGSNs may further be included. Specifically, each SGSN may acquire an international mobile subscriber identification number (International Mobile Subscriber Identification Number, IMSI for short) of an MS from the MS or the access network device, or may further acquire the IMSI of the MS from an SGSN that the MS previously attaches to. Then, each SGSN acquires subscription data or configuration data of the MS according to the IMSI of the MS (where the configuration data includes but is not limited to a roaming agreement of an operator and the like), acquires, according to the subscription data or configuration data of the MS, a reject cause value for rejecting an access of the MS, and sends the reject cause value to the access network device.

Step 602: The access network device sends an access request reject message corresponding to the softest reject cause value to the MS.

It should be noted that a reject cause value in this embodiment is a reject cause value for rejecting an access of the MS. The access network device may include but is not limited to a base station subsystem (Base Station Subsystem, BSS for short) or a base station controller (Base Station Controller, BSC for short). The embodiment of the present invention merely takes a BSS as an example for description. The access request message may further be called a non access stratum (Non Access Stratum, NAS for short) request message, which may specifically include but is not limited to the following message: an attach request (Attach Request) message or a routing area update request (Routing Area Update Request) message. The access request reject message may further be called a non access stratum (Non Access Stratum, NAS for short) reject message, which may specifically include but is not limited to the following message: an attach reject (Attach Reject) message or a routing area update reject (Routing Area Update Reject) message.

The network access method provided in the embodiment of the present invention is used. In this case, because after an access network device acquires reject cause values that are for rejecting an access of an MS and sent by all SGSNs interconnecting to the access network device, the access network device sets an LLC parameter corresponding to the softest reject cause value as an LLC parameter corresponding to the last reject cause value, and the access network device may select an access request reject message corresponding to the softest reject cause value and send the access request reject message to the MS, so that the MS performs a corresponding operation according to a reject cause value included in the access request reject message.

In this embodiment, after an access network device acquires reject cause values sent by all SGSNs interconnecting to the access network device, the access network device sets, according to the acquired reject cause values that are for rejecting an access of an MS and sent by the SGSNs, an LLC parameter corresponding to the softest reject cause value as a latest LLC parameter, so that the access network device is capable of using the latest LLC parameter to return the softest reject cause value to the MS, thereby avoiding a problem caused by the MS for discarding an access request reject message sent by an SGSN, reducing a network access delay, and improving user experience.

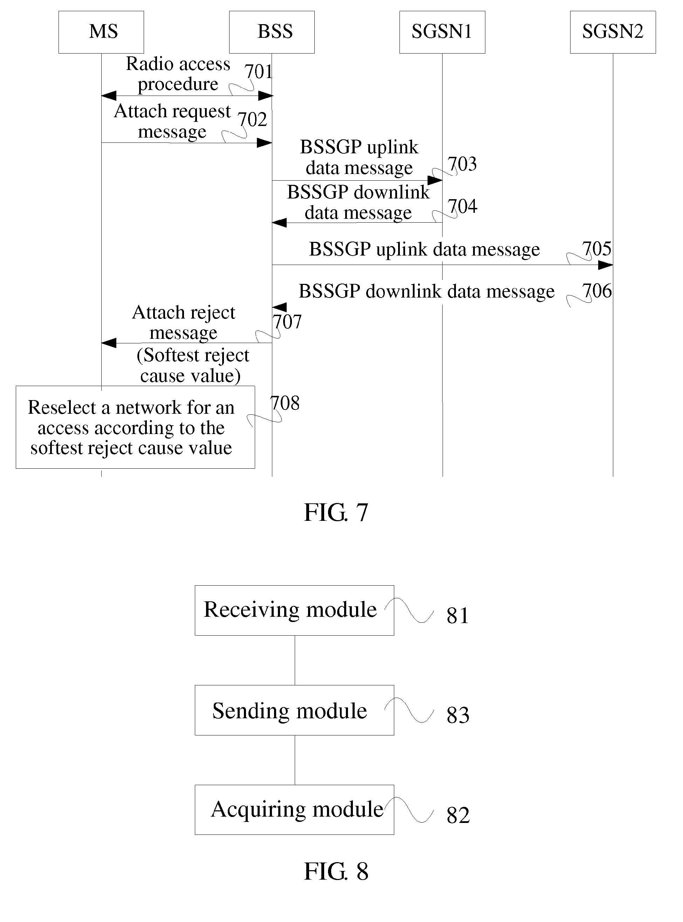

FIG. 7 is a schematic flowchart of yet still another network access method according to a seventh embodiment of the present invention, and this embodiment is a specific example of the sixth embodiment. In this embodiment, a BSS is taken as an example of an access network device. The BSS separately interconnects to an SGSN1 of an operator 1 and an SGSN2 of an operator 2. As shown in FIG. 7, the network access method in this embodiment may include the following steps:

Step 701: An MS interacts with the BSS and performs a radio access procedure, and the BSS allocates radio resources to the MS.

Step 702: The MS sends an attach request (Attach Request) message to the BSS.

Step 703: The BSS sends a Base Station Subsystem GPRS Protocol (Base Station Subsystem GPRS Protocol, BSSGP for short) uplink data (BSSGP UL-UNIDATA) message to the SGSN1, where the BSSGP uplink data message includes the attach request message and a redirection attempt flag (redirection attempt flag), and the redirection attempt flag may be used to indicate that the BSS supports an MOCN.

Further, the BSS may still need to save information about the SGSN1, record that the attach request message of the MS has been sent to the SGSN1, and no longer send the attach request message to the SGSN1.

Step 704: The SGSN1 may acquire an IMSI of the MS from the MS or acquire the IMSI of the MS from an SGSN that the MS previously attaches to; a first SGSN may further acquire the IMSI of the MS from the SGSN that the MS previously attaches to, and acquire subscription data or configuration data of the MS according to the acquired IMSI of the MS, determine that the MS cannot connect to the SGSN1, and send a BSSGP downlink data (BSSGP DL-UNIDATA) message to the BSS, where the BSSGP downlink data message includes an attach reject message, the IMSI of the MS, the attach request message, a redirection indication (redirection indication), and a reject cause value (reject cause), and the attach reject message also includes the reject cause value; and the BSS may save the attach reject message.

The reject cause value may be included in the redirection indication, or may also be an independent cell, which is not limited in this embodiment.

Step 705: The BSS learns, according to the acquired redirection indication, that the SGSN1 rejects an access of the MS, saves the acquired reject cause value, and sends the BSSGP uplink data (BSSGP UL-UNIDATA) message to the SGSN2, where the BSSGP uplink data message includes the attach request message, the redirection attempt flag (redirection attempt flag), and the IMSI of the MS, and the redirection attempt flag may be used to indicate that the BSS supports the MOCN.

Step 706: The SGSN2 acquires the subscription data or configuration data of the MS according to the acquired IMSI of the MS, determines that the MS cannot connect to the SGSN2, and sends the BSSGP downlink data (BSSGP DL-UNIDATA) message to the BSS, where the BSSGP downlink data message includes the attach reject message, the IMSI of the MS, the attach request message, the redirection indication (redirection indication), and the reject cause value (reject cause), and the attach reject message also includes the reject cause value; and the BSS may save the attach reject message.

The reject cause value may be included in the redirection indication, or may also be an independent cell, which is not limited in this embodiment.

Specifically, the SGSN2 may send a reset (Reset) message to the MS according to the redirection attempt flag included in the BSSGP uplink data message to reset an LLC parameter exchanged between the SGSN2 and the MS. It should be noted that the LLC parameter may at least include one of the following parameters: an LLC counter (counter), a sequence number (sequence number) used at an LLC layer, an unconfirmed sequence number (Unconfirmed sequence number, N(U)) used at the LLC layer, an unconfirmed send state variable (Unconfirmed send state variable, V(U)) used at the LLC layer, another control field parameter or variable of the LLC layer, a receive sequence number (Receive Sequence Number, N(R)), and the like. When a message is exchanged between the SGSN2 and the MS, the reset LLC parameter may be written at a corresponding position in the message (such as an authentication message), thereby avoiding that the MS discards the message.

Step 707: The BSS sets an LLC parameter corresponding to the softest reject cause value as a latest LLC parameter and sends an attach reject message corresponding to the softest reject cause value to the MS because the BSS has acquired redirection indications sent by all SGSNs interconnecting to the BSS, where the attach reject message includes the softest reject cause value.

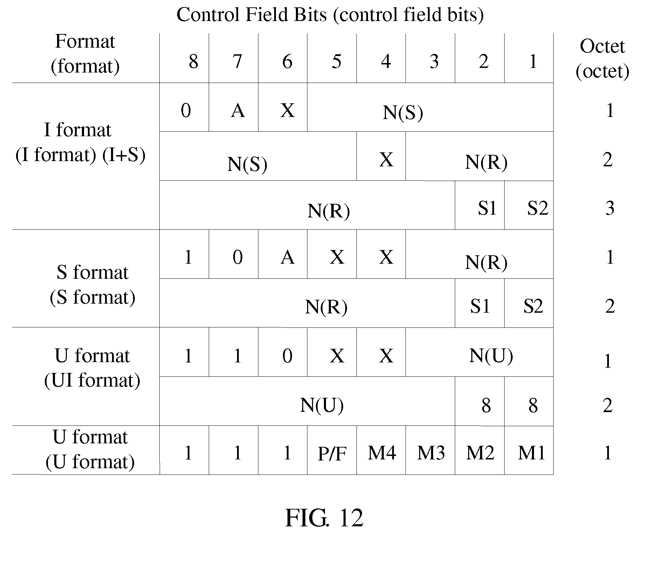

In this step, the BSS has acquired the redirection indications sent by all SGSNs interconnecting to the BSS. Therefore, no other SGSNs that can be redirected exist. The BSS reads (acquires) the LLC parameter (that is a latest LLC parameter) corresponding to the reject cause value sent by the last SGSN; and the BSS compares the acquired reject cause values (including all reject cause values acquired previously) and sets the LLC parameter corresponding to the softest cause value as the latest LLC parameter. Specifically, the BSS reads an N(U) value (that is a latest N(U) value) included in the message sent by the last SGSN, and writes the N(U) value in an N(U) field of a message sent by an SGSN corresponding to the softest cause value to replace an original N(U) value in the message sent by the SGSN. That is, the BSS sets an N(U) value corresponding to the softest cause value as the latest N(U) value. If the SGSN corresponding to the softest reject cause value is the last SGSN, the BSS directly sends an access request reject message corresponding to the softest reject cause value to the MS. The BSS may read or fill in the LLC parameter with reference to each field shown in FIG. 12, and detailed descriptions are as follows:
AAcknowledgement request bit acknowledgement request bit;
E Encryption function bit encryption function bit;
Mn Unnumbered function bit unnumbered function bit;
N(R) Transmitter receive sequence number transmitter receive sequence number;
N(S) Transmitter send sequence number transmitter send sequence number;
N(U) Transmitter unconfirmed sequence number transmitter unconfirmed sequence number;
P/F Poll bit, when issued as a command request bit;
Final bit, when issued as a response final bit;
PM Protected mode bit protected mode bit;
Sn Supervisory function bit supervisory function bit; and
XSpare bit spare bit;
The ascending order of reject cause values defined in an existing standard is #15<#14<#13<#12<#11, where definitions of each of the reject cause value are as follows:
#11 PLMN not allowed (PLMN not allowed);
#12 Location area not allowed (location area not allowed);
#13 Roaming not allowed in the location area (roaming not allowed in the location area);
#14 GPRS services not allowed in this PLMN (GPRS services not allowed in this PLMN); and
#15 No Suitable Cells in Location Area (no suitable cells in location area).

Specifically, if the reject cause value sent by the SGSN1 is 15 (No Suitable Cells in Location Area), and the reject cause value sent by the SGSN2 is 11 (PLMN not allowed), according to a rule in the existing standard, because the reject cause value 15 is softer than the reject cause value 11, the BSS reads an LLC parameter included in a message sent by the SGSN2 and replaces an LLC parameter included in a message sent by the SGSN1 with the LLC parameter included in the message sent by the SGSN2. Specifically, the BSS reads an N(U) value included in the message sent by the SGSN2 and replaces an N(U) value included in the message sent by the SGSN1 with the N(U) value include in the message sent by the SGSN2. That is, the BSS sets the N(U) value in the message sent by the SGSN1 as the N(U) value in the message sent by the SGSN2, and sends the MS an access request reject message sent by the SGSN1. If an access reject cause value sent by the SGSN1 is 12 (Location area not allowed), and an access reject cause value sent by the SGSN2 is 13 (Roaming not allowed in the location area), according to a rule in the existing standard, because the reject cause value 13 is softer than the reject cause value 12, the attach reject message of the SGSN2 is directly sent to the MS.

Step 708: The MS reselects a network for an access according to the softest reject cause value.

In this embodiment, after a BSS acquires reject cause values sent by all SGSNs interconnecting to the BSS, the BSS sets, according to the acquired reject cause values that are for rejecting an access of an MS and sent by all SGSNs interconnecting to the BSS, an LLC parameter corresponding to the softest reject cause value as a latest LLC parameter, so that the BSS is capable of using the latest LLC parameter to return the softest reject cause value to the MS, thereby avoiding a problem caused by the MS for discarding an access request reject message sent by an SGSN, reducing a network access delay, and improving user experience.

It should be noted that, for brevity, the foregoing method embodiments are represented as a series of actions. However, persons skilled in the art should understand that the present invention is not limited to the order of the described actions, because according to the present invention, some steps may adopt other orders or occur simultaneously. It should be further understood by persons skilled in the art that the embodiments described in the specification all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

FIG. 8 is a schematic structural diagram of a network access apparatus according to an eighth embodiment of the present invention. As shown in FIG. 8, the network access apparatus in this embodiment may include a receiving module 81, an acquiring module 82, and a sending module 83, where the receiving module 81 receives a first reject cause value that is sent by an access network device and is from a first SGSN for rejecting an access of an MS, the first reject cause value is sent by the first SGSN to the access network device; the acquiring module 82 acquires a second reject cause value from itself; and the sending module 83 sends a softer reject cause value between the first reject cause value and the second reject cause value to the access network device.

Both functions of the second SGSN in the first embodiment of the present invention and functions of the SGSN2 in the third embodiment of the present invention may be implemented by the network access apparatus provided in this embodiment.

Further, the receiving module 81 in this embodiment may be specifically configured to receive a BSSGP uplink data message sent by the access network device, where the BSSGP uplink data message includes the first reject cause value of the first SGSN for rejecting the access of the MS.

Further, the sending module 83 in this embodiment may be specifically configured to send a BSSGP downlink data message to the access network device, where the BSSGP downlink data message includes the softer reject cause value and an access request reject message including the softer reject cause value. Specifically, the sending module 83 may be specifically configured to learn that the first reject cause value is not CS/PS coordination and send the softer reject cause value between the first reject cause value and the second reject cause value to the access network device. The sending module 83 may further be configured to learn that the first reject cause value is the CS/PS coordination and send the second reject cause value to the access network device.

In this embodiment, a receiving module receives a first reject cause value that is sent by an access network device and is from a first SGSN for rejecting an access of an MS, and an acquiring module acquires a second reject cause value from a second SGSN for rejecting an access of the MS, so that a sending module is capable of sending a softer reject cause value between the first reject cause value and the second reject cause value to the access network device, and a reject cause value acquired by the access network device is always the softest one, and further an access request reject message that is acquired last and includes the softest reject cause value can be returned to the MS after reject cause values sent by all SGSNs interconnecting to the access network device are acquired, thereby avoiding a problem caused by the MS for discarding an access request reject message sent by an SGSN, reducing a network access delay, and improving user experience.

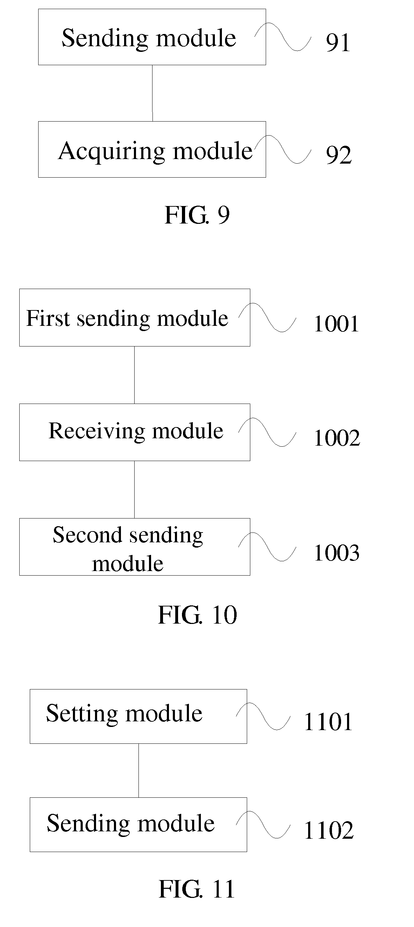

FIG. 9 is a schematic structural diagram of another network access apparatus according to a ninth embodiment of the present invention. As shown in FIG. 9, the network access apparatus in this embodiment may include a sending module 91 and an acquiring module 92, where the sending module 91 sends a first reject cause value of a first SGSN for rejecting an access of an MS to a second SGSN, the first reject cause value is sent by the first SGSN to the access network device, the acquiring module 92 acquires a softer reject cause value between the first reject cause value sent by the second SGSN and a second reject cause value, and the second reject cause value is a reject cause value acquired by the second SGSN from the second SGSN for rejecting an access of the MS.

Both functions of the access network device in the second embodiment of the present invention and functions of the BSS in the third embodiment of the present invention may be implemented by the network access apparatus provided in this embodiment.

Further, the sending module 91 in this embodiment may be specifically configured to send a BSSGP uplink data message to the second SGSN, where the BSSGP uplink data message includes the first reject cause value of the first SGSN for rejecting the access of the MS. Specifically, the sending module 91 may be specifically configured to learn that the first reject cause value is not CS/PS coordination and send the first reject cause value of the first SGSN for rejecting the access of the MS to the second SGSN.

Further, the acquiring module 92 in this embodiment may be specifically configured to receive a BSSGP downlink data message sent by the second SGSN, where the BSSGP downlink data message includes the softer reject cause value and an access request reject message including the softer reject cause value. The acquiring module 92 may further be configured to send the access request reject message including the softer reject cause value to the MS.

In this embodiment, a sending module sends a first reject cause value of a first SGSN for rejecting an access of an MS to a second SGSN, and an acquiring module acquires a softer reject cause value between the first reject cause value sent by the second SGSN and a second reject cause value acquired by the second SGSN from the second SGSN for rejecting an access of the MS, so that a reject cause value acquired by an access network device is always the softest one, and further an access request reject message that is acquired last and includes the softest reject cause value can be returned to the MS after reject cause values sent by all SGSNs interconnecting to the access network device are acquired, thereby avoiding a problem caused by the MS for discarding an access request reject message sent by an SGSN, reducing a network access delay, and improving user experience.

FIG. 10 is a schematic structural diagram of still another network access apparatus according to a tenth embodiment of the present invention. As shown in FIG. 10, the network access apparatus in this embodiment may include a first sending module 1001, a receiving module 1002, and a second sending module 1003, where the first sending module 1001 sends, according to acquired reject cause values sent by SGSNs, an access request message of the MS to an SGSN corresponding to the softest reject cause value, the receiving module 1002 receives an access request reject message returned by the SGSN, and the second sending module 1003 sends the access request reject message to the MS.

Both functions of the access network device in the fourth embodiment of the present invention and functions of the BSS in the fifth embodiment of the present invention may be implemented by the network access apparatus provided in this embodiment.

In this embodiment, after an access network device acquires reject cause values sent by all SGSNs interconnecting to the access network device, a first sending module sends, according to the acquired reject cause values that are for rejecting an access of an MS and sent by the SGSNs, an access request message of the MS to an SGSN corresponding to the softest reject cause value, so that a reject cause value last acquired by a receiving module can be the softest one, and further a second sending module returns the last acquired reject cause value to the MS, thereby avoiding a problem caused by the MS for discarding an access request reject message sent by an SGSN, reducing a network access delay, and improving user experience.

FIG. 11 is a schematic structural diagram of yet still another network access apparatus according to an eleventh embodiment of the present invention. As shown in FIG. 11, the network access apparatus in this embodiment may include a setting module 1101 and a sending module 1102, where the setting module 1101 sets, according to acquired reject cause values sent by SGSNs, an LLC parameter corresponding to the softest reject cause value as a latest LLC parameter, and the sending module 1102 sends an access request reject message corresponding to the softest reject cause value to an MS.

Both functions of the access network device in the sixth embodiment of the present invention and functions of the BSS in the seventh embodiment of the present invention may be implemented by the network access apparatus provided in this embodiment.

Further, the setting module 1101 in this embodiment may be specifically configured to acquire a latest LLC parameter sent by the last SGSN and set, according to the acquired reject cause values sent by the SGSNs, the LLC parameter corresponding to the softest reject cause value as the latest LLC parameter.

In this embodiment, after an access network device acquires reject cause values sent by all SGSNs interconnecting to the access network device, a setting module sets, according to the acquired reject cause values that are for rejecting an access of an MS and sent by the SGSNs, an LLC parameter corresponding to the softest reject cause value as a latest LLC parameter, so that a sending module is capable of using the latest LLC parameter to return the softest reject cause value to the MS, thereby avoiding a problem caused by the MS for discarding an access request reject message sent by an SGSN, reducing a network access delay, and improving user experience.

Persons of ordinary skill in the art should understand that all or part of the steps of the methods in the embodiments may be implemented by a program instructing relevant hardware. The program may be stored in a computer readable storage medium. When the program is run, the steps of the methods in the embodiments are performed. The storage medium may be any medium capable of storing program codes, such as a ROM, a RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solution described in the foregoing embodiments or make equivalent replacements to some technical features thereof, as long as such modifications or replacements do not cause the essence of corresponding technical solutions to depart from the spirit and scope of the technical solutions of the embodiments of the present invention.

## Claims

1. A network access method, comprising:
receiving, by a second SGSN, a first reject cause value sent by an access network device, wherein the first reject cause value is sent by a first SGSN to the access network device;
acquiring, by the second SGSN, a second reject cause value from itself; and
sending, by the second SGSN, a softer reject cause value between the first reject cause value and the second reject cause value to the access network device.

2. The method according to claim 1, before the receiving, by a second SGSN, a first reject cause value sent by an access network device, further comprising:
acquiring, by the first SGSN, an IMSI of an MS;
acquiring, by the first SGSN, subscription data or configuration data of the MS according to the IMSI of the MS;
acquiring, by the first SGSN, the first reject cause value according to the subscription data or configuration data of the MS; and
sending, by the first SGSN, the first reject cause value to the access network device.

3. The method according to claim 1, before the receiving, by a second SGSN, a first reject cause value sent by an access network device, further comprising:
receiving, by the first SGSN, a third reject cause value sent by the access network device, wherein the third reject cause value is sent by a third SGSN to the access network device;
acquiring, by the first SGSN, an IMSI of an MS; acquiring, by the first SGSN, subscription data or configuration data of the MS according to the IMSI of the MS; and acquiring, by the first SGSN, a reject cause value from itself according to the subscription data or configuration data of the MS; and
sending, by the first SGSN, the first reject cause value to the access network device, wherein the first reject cause value is a softer reject cause value between the reject cause value of the first SGSN itself and the third reject cause value.

4. The method according to claim 1, wherein the receiving, by a second SGSN, a first reject cause value sent by an access network device comprises:
receiving, by the second SGSN, a BSSGP uplink data message sent by the access network device, wherein the BSSGP uplink data message comprises the first reject cause value.

5. The method according to claim 1, wherein the method further comprises: receiving, by the second SGSN, an IMSI of the MS sent by the access network device, and the acquiring, by the second SGSN, a second reject cause value from itself comprises:
acquiring, by the second SGSN, subscription data or configuration data of the MS according to the IMSI of the MS; and
acquiring, by the second SGSN, the second reject cause value from itself according to the subscription data or configuration data of the MS.

6. The method according to claim 1, wherein the sending, by the second SGSN, a softer reject cause value between the first reject cause value and the second reject cause value to the access network device comprises:
sending, by the second SGSN, a BSSGP downlink data message to the access network device, wherein the BSSGP downlink data message comprises the softer reject cause value and an access request reject message comprising the softer reject cause value.

7. The method according to claim 6, further comprising:
sending, by the access network device, the access request reject message comprising the softer reject cause value to the MS.

8. The method according to claim 7, wherein the sending, by the access network device, the access request reject message comprising the softer reject cause value to the MS comprises:
sending, by the access network device, the access request reject message comprising the softer reject cause value to the MS if the access network device has acquired reject cause values sent by all SGSNs interconnecting to the access network device.

9. The method according to any one of claims 1 to 8, before the receiving, by a second SGSN, a first reject cause value sent by an access network device, further comprising:
learning, by the access network device, that the first reject cause value is not CS/PS coordination.

10. The method according to any one of claims 1 to 8, before the sending, by the second SGSN, a softer reject cause value between the first reject cause value and the second reject cause value to the access network device, further comprising:
learning, by the second SGSN, that the first reject cause value is not CS/PS coordination.

11. A network access method, comprising:
sending, by an access network device, a first reject cause value to a second SGSN, wherein the first reject cause value is sent by a first SGSN to the access network device; and
acquiring, by the access network device, a softer reject cause value between the first reject cause value sent by the second SGSN and a second reject cause value, wherein the second reject cause value is a reject cause value acquired by the second SGSN from itself.

12. The method according to claim 11, before the sending, by an access network device, a first reject cause value to a second SGSN, further comprising:
acquiring, by the first SGSN, an IMSI of an MS;
acquiring, by the first SGSN, subscription data or configuration data of the MS according to the IMSI of the MS;
acquiring, by the first SGSN, the first reject cause value according to the subscription data or configuration data of the MS; and
sending, by the first SGSN, the first reject cause value to the access network device.

13. The method according to claim 11, before the sending, by an access network device, a first reject cause value to a second SGSN, further comprising:
sending, by the access network device, a third reject cause value to the first SGSN, wherein the third reject cause value is sent by a third SGSN to the access network device;
acquiring, by the first SGSN, an IMSI of an MS; acquiring, by the first SGSN, subscription data or configuration data of the MS according to the IMSI of the MS; and acquiring, by the first SGSN, a reject cause value from itself according to the subscription data or configuration data of the MS; and
sending, by the first SGSN, the first reject cause value to the access network device, wherein the first reject cause value is a softer reject cause value between the reject cause value of the first SGSN itself and the third reject cause value.

14. The method according to claim 11, wherein the sending, by an access network device, a first reject cause value to a second SGSN comprises:
sending, by the access network device, a BSSGP uplink data message to the second SGSN, wherein the BSSGP uplink data message comprises the first reject cause value.

15. The method according to claim 11, wherein the method further comprises: sending, by the access network device, an IMSI of the MS to the second SGSN, and the acquiring, by the second SGSN, a second reject cause value from itself comprises:
acquiring, by the second SGSN, subscription data or configuration data of the MS according to the IMSI of the MS; and
acquiring, by the second SGSN, the second reject cause value from itself according to the subscription data or configuration data of the MS.

16. The method according to claim 11, wherein the acquiring, by the access network device, a softer reject cause value between the first reject cause value sent by the second SGSN and a second reject cause value comprises:
receiving, by the access network device, a BSSGP downlink data message sent by the second SGSN, wherein the BSSGP downlink data message comprises the softer reject cause value and an access request reject message comprising the softer reject cause value.

17. The method according to claim 16, further comprising:
sending, by the access network device, the access request reject message comprising the softer reject cause value to the MS.

18. The method according to claim 17, wherein the sending, by the access network device, the access request reject message comprising the softer reject cause value to the MS comprises:
sending, by the access network device, the access request reject message comprising the softer reject cause value to the MS if the access network device has acquired reject cause values sent by all SGSNs interconnecting to the access network device.

19. The method according to any one of claims 11 to 18, before the sending, by an access network device, a first reject cause value to a second SGSN, further comprising:
learning, by the access network device, that the first reject cause value is not CS/PS coordination.

20. A network access method, comprising:
sending, by an access network device according to acquired reject cause values sent by SGSNs, an access request message of the MS to an SGSN corresponding to the softest reject cause value;
receiving, by the access network device, an access request reject message returned by the SGSN; and
sending, by the access network device, the access request reject message to the MS.

21. The method according to claim 20, before the sending, by an access network device according to acquired reject cause values sent by SGSNs, an access request message of the MS to an SGSN corresponding to the softest reject cause value, further comprising:
acquiring, by the SGSN, an IMSI of the MS;
acquiring, by the SGSN, subscription data or configuration data of the MS according to the IMSI of the MS;
acquiring, by the SGSN, a reject cause value according to the subscription data or configuration data of the MS; and
sending, by the SGSN, the reject cause value to the access network device.

22. A network access method, comprising:
setting, by an access network device according to acquired reject cause values sent by SGSNs, an LLC parameter corresponding to the softest reject cause value as a latest LLC parameter; and
sending, by the access network device, an access request reject message corresponding to the softest reject cause value to an MS.

23. The method according to claim 22, wherein the setting, by an access network device according to acquired reject cause values sent by SGSNs, an LLC parameter corresponding to the softest reject cause value as a latest LLC parameter comprises:
acquiring, by the access network device, a latest LLC parameter sent by the last SGSN and setting, according to the acquired reject cause values sent by the SGSNs, the LLC parameter corresponding to the softest reject cause value as the latest LLC parameter.

24. The method according to claim 22 or 23, before the setting, by an access network device according to acquired reject cause values sent by SGSNs, an LLC parameter corresponding to the softest reject cause value as a latest LLC parameter, further comprising:
acquiring, by the SGSN, an IMSI of the MS;
acquiring, by the SGSN, subscription data or configuration data of the MS according to the IMSI of the MS;
acquiring, by the SGSN, a reject cause value according to the subscription data or configuration data of the MS; and
sending, by the SGSN, the reject cause value to the access network device.

25. The method according to claim 22 or 23, wherein the LLC parameter comprises one of the following parameters:
an LLC counter, a sequence number used at an LLC layer, an unconfirmed sequence number used at the LLC layer, an unconfirmed send state variable used at the LLC layer, and another control field parameter or variable of the LLC layer.

26. A network access apparatus, comprising:
a receiving module, configured to receive a first reject cause value sent by an access network device, wherein the first reject cause value is sent by a first SGSN to the access network device;
an acquiring module, configured to acquire a second reject cause value from itself; and
a sending module, configured to send a softer reject cause value between the first reject cause value and the second reject cause value to the access network device.

27. The apparatus according to claim 26, wherein the receiving module is specifically configured to receive a BSSGP uplink data message sent by the access network device, and the BSSGP uplink data message comprises the first reject cause value.

28. The apparatus according to claim 26, wherein the sending module is specifically configured to send a BSSGP downlink data message to the access network device, and the BSSGP downlink data message comprises the softer reject cause value and an access request reject message comprising the softer reject cause value.

29. The apparatus according to any one of claims 26 to 28, wherein the sending module is specifically configured to learn that the first reject cause value is not CS/PS coordination and send the softer reject cause value between the first reject cause value and the second reject cause value to the access network device.

30. A network access apparatus, comprising:
a sending module, configured to send a first reject cause value to a second SGSN, wherein the first reject cause value is sent by a first SGSN to the access network device; and
an acquiring module, configured to acquire a softer reject cause value between the first reject cause value sent by the second SGSN and a second reject cause value, wherein the second reject cause value is a reject cause value acquired by the second SGSN from itself.

31. The apparatus according to claim 30, wherein the sending module is specifically configured to send a BSSGP uplink data message to the second SGSN, and the BSSGP uplink data message comprises the first reject cause value.

32. The apparatus according to claim 30, wherein the acquiring module is specifically configured to receive a BSSGP downlink data message sent by the second SGSN, and the BSSGP downlink data message comprises the softer reject cause value and an access request reject message comprising the softer reject cause value.

33. The apparatus according to claim 32, wherein the acquiring module is further configured to send the access request reject message comprising the softer reject cause value to the MS.

34. The apparatus according to any one of claims 30 to 33, wherein the sending module is specifically configured to learn that the first reject cause value is not CS/PS coordination and send the first reject cause value of the first SGSN to the second SGSN.

35. A network access apparatus, comprising:
a first sending module, configured to send, according to acquired reject cause values sent by SGSNs, an access request message of the MS to an SGSN corresponding to the softest reject cause value;
a receiving module, configured to receive an access request reject message returned by the SGSN; and
a second sending module, configured to send the access request reject message to the MS.

36. A network access apparatus, comprising:
a setting module, configured to set, according to acquired reject cause values sent by SGSNs, an LLC parameter corresponding to the softest reject cause value as a latest LLC parameter; and
a sending module, configured to send an access request reject message corresponding to the softest reject cause value to an MS.

37. The apparatus according to claim 36, wherein the setting module is specifically configured to acquire a latest LLC parameter sent by the last SGSN and set, according to the acquired reject cause values sent by the SGSNs, the LLC parameter corresponding to the softest reject cause value as the latest LLC parameter.
